# EUROPEAN PATENT SPECIFICATION

(11) **EP 4 212 321 B1**
(45) Date of publication and mention of the grant of the patent: **28.10.2026**
(21) Application number: 22151997.8
(22) Date of filing: 18.01.2022
(51) Int. Cl.: B29C 70/42, B29B 11/12, B29B 11/16, B29C 43/52, B29C 43/36, B29C 43/32, B29C 70/54, B29C 43/20, B29L 31/00, F03D 1/06

(54) **MANUFACTURING OF AN EMBEDDING ELEMENT FOR A WIND TURBINE BLADE**
HERSTELLUNG EINES EINBETTUNGSELEMENTS FÜR EINE WINDTURBINENSCHAUFEL
FABRICATION D'UN ÉLÉMENT D'INCORPORATION D'UNE PALE DE TURBINE ÉOLIENNE

(43) Date of publication of application: 19.07.2023
(73) Proprietor: LM Wind Power A/S, 6000 Kolding (DK)
(72) Inventor: MADSEN, Kristian Lehmann, 6000 Kolding (DK)
(74) Representative: COPA Copenhagen Patents

(56) References cited:
- EP-A1- 1 995 040
- JP-A- H10 212 649
- US-A1- 2010 024 966
- US-A1- 2013 240 150
- US-A1- 2020 263 658

## Description

### Field of the invention

The present invention relates to a method of manufacturing an embedding element for embedment in a shell structure of a wind turbine rotor blade and to an embedding element obtainable by said method. The present invention also relates to a wind turbine rotor blade comprising a plurality of said embedding elements, and to methods of manufacturing said blade.

### Background of the invention

In view of climate change and an increasingly unsustainable fossil fuel use, wind proves to be a cost-effective, clean and renewable source of energy. Wind turbines usually comprise a tower, generator, gearbox, nacelle, and one or more rotor blades. Wind turbine blades capture kinetic energy of wind using known airfoil principles. Modern wind turbines may have rotor blades that exceed 100 meters in length.

Wind turbine blades are typically made from a fibre-reinforced polymer material and comprise a pressure side shell half and a suction side shell half. The cross-sectional profile of a typical blade includes an airfoil for creating an air flow leading to a pressure difference between both sides. The resulting lift force generates torque for producing electricity.

The shell halves of wind turbine blades are usually manufactured using moulds. First, a blade gel coat or primer is applied to the mould. Subsequently, fibre reinforcement and/or fabrics are placed into the mould followed by resin infusion. Vacuum is then typically used to draw epoxy resin material into a mould. Alternatively, prepreg technology can be used in which a fibre or fabric pre-impregnated with resin forms a homogenous material which can be introduced into the mould. Several other moulding techniques are known for manufacturing wind turbine blades, including compression moulding and resin transfer moulding. The shell halves are assembled by being glued or bolted together substantially along a chord plane of the blade. The root region of each shell half typically has a circular cross section.

The connection between the blade and a hub of a wind turbine must be able to transfer heavy dynamic forces. The circular end face of a rotor blade root is usually fastened to a circular metal flange on the turbine hub by means of bolts or threaded rods. A typical root region of a blade comprises layers of fibres forming an outer layer and an inner layer in between which fastening members in the form of bushings are placed. Separately formed stiff inserts or embedding elements may be placed in between each pair of adjacent bushings, whereby the bushings are mutually separated by the stiff inserts. Known inserts are made of glass fibres embedded in a suitable stiffening resin.

Typically, the connection and transfer of loads from the blade to the hub is provided by mounting the blade to the hub by screwing bolts into the bushings placed in the root or by means of nuts screwed onto stud bolts screwed into the bushings. In case the number of bolts and thereby the number of bushings has to be increased to handle a given load, the remaining area of the fibre composite material between the bushings is reduced. This may result in the root connection being insufficiently supported to withstand the loads, whereby the connection between the blade root and the hub may fail since the bushings are insufficiently retained in the composite material and thus pulled out of the composite material of the root region. This is especially a problem when long and thereby heavy blades are to be used.

To this end, WO 2012/140039 provides a solution wherein bushings are laminated into a composite structure reinforced with metal fibres, such as steel fibres. The bushings are separated by rigid inserts or embedding elements comprising a wedge-shaped part and an opposing end substantially corresponding to the region between the lateral faces of adjacent bushings. The rigid inserts are manufactured from layers of metal fibres and a second type of fibres, the layers being embedded in a suitable resin such as polyester, epoxy or vinyl ester.

WO 2017/121710 A1 discloses an embedding element comprising a wedge-shaped part which tapers in the direction towards one end portion, the embedding element comprising a fibre material and a binding agent, wherein the fibre material is at least partially joined together by means of the binding agent. The embedding element can be manufactured in a pultrusion process, drawing glass fibre rovings into a heating station, contacting the fibre material with a heated binding agent, and passing the resulting material through an adequately shaped nozzle to form a pultrusion string.

For these known embedding elements it is typically necessary to machine the full surface of the embedding element, for achieving a satisfactory adhesion between the resin and the embedding element in the root end of the blade. This often results in waste production from machine dust of 15-30% of the total mass of the embedding element.

Another possible concern is the formation of wrinkles in the shell fibre material, in particular along the tapered wedge-shaped part of the embedding elements. This is undesirable, because such wrinkles tend to form structurally weak zones, sometimes leading to necessary repair or even failure.

US 2013/0240150 A1 relates to a preform for the molding of a fiber-reinforced resin beam, the preform comprising a reinforcing-fiber beam which has been formed from a reinforcing-fiber base made up of many reinforcing fibers and has a cross-sectional shape comprising at least one linear part and at least one curved part.

US 2020/0263658 A1 discloses a root end structure for a wind turbine blade comprising a plurality of fastening members distributed along a root end of a blade part, wherein a plurality of pultruded elements are arranged in between the fastening members. Each pultruded element has a second side surface facing a first side surface of an adjacent fastening member.

EP 1 995 040 A1 relates to a method and apparatus for producing a reinforcing fiber molding comprising molding a strip-like laminate comprising layered multiple reinforcing fiber sheets and a laminate maintaining material for maintaining the layered state, which molding has at least two bent portions in the sectional form perpendicular to the longitudinal direction of the strip-like laminate, has a web portion formed between the ends of the adjacent bent portions, and has at least two flange portions protruding from the web portion via the bent portions.

JPH10212649A discloses a manufacturing method and apparatus for use in providing a fiber molded body from a matrix comprising short fibers and a binder component, wherein an upper mold and lower die are provided, and wherein lateral mold members can be moved in an inward direction.

US 2010/0024966 A1 discloses a method and apparatus for producing solid profiles from a strip of fiber preimpregnated with resin. The method includes the steps of: providing a planar strip of fiber preimpregnated with resin which has a longitudinal direction and a transverse direction; corrugating the planar strip to form a corrugated strip with a plurality of zigzag folds parallel to the longitudinal direction; and compacting the corrugated strip in the transverse direction in order to place in contact and to join, one to the other, surfaces of the plurality of folds in order to form a solid profile.

Overall, there is an interest in further improving the strength of existing root end arrangements, in particular with respect to the pull-out strength of the bushings fastened in between the respective embedding elements. The root bushing strength is the main driver for the root diameter of a wind turbine blade. By making a stronger bushing connection the root diameter can potentially be reduced.

It is therefore an object of the present invention to provide an embedding element that overcomes the above-described drawbacks.

It is another object of the present invention to provide a method of manufacturing an embedding element which reduces waste.

In particular, it is an object of the present invention to provide an embedding element which has an improved strength and leads to an improved pull-out resistance of bushings at the root end of the blade.

### Summary of the invention

The present inventors have found that one or more of these objects are achieved in a surprisingly efficient solution by providing a method of manufacturing an embedding element for embedment in a shell structure of a wind turbine rotor blade, the method comprising the steps of
providing a lower mould plate comprising a first lateral side such as a first lateral edge, an opposing second lateral side such as a second lateral edge, and a top surface extending between the first and second lateral sides,
arranging a first movable core member and a second movable core member on the top surface of the lower mould plate, such that the first movable core member is closer to the first lateral side, such as the first lateral edge, and the second movable core member is closer to the second lateral side, such as the second lateral edge, of the lower mould plate,
arranging a fibre material and a binding agent on the lower mould plate in between the first movable core and the second movable core,
placing an upper mould plate on top of the first moveable core member and the second moveable core member to form a cavity between the upper and lower mould plates and the first and second moveable core members,
pushing one or both of the core members towards the cavity for compacting the fibre material,
heating the fibre material and the binding agent to form the embedding element or a preform thereof,
cooling the embedding element or the preform thereof,
retracting one or both of the core members for releasing the embedding element or the preform thereof, and
optionally cutting the preform to provide two or more embedding elements,
wherein each movable core member is provided with a longitudinally extending lateral surface for engaging the fibre material, the lateral surface of the core member extending convexly in a cross-sectional view perpendicular to the longitudinal axis of the core member, and wherein the respective lateral surfaces of the core members face each other when the first movable core member and a second movable core member are arranged on the top surface of the lower mould plate, and wherein the embedding element has a first end portion and a second end portion, wherein the embedding element comprises a wedge-shaped part which tapers in the direction towards the second end portion.

It was found that this method is not only more cost-efficient, resulting in a 15-30% waste reduction as compared to known methods which rely on machining of the part, but that this method surprisingly also results in considerable structural improvement, in particular providing considerably stronger connections to bushings at the root end of the blade. Furthermore, a reduction of wrinkle formation at the root end of the blade is observed. **In** the method of the present invention, essentially no machining is required after the part is released from the mould. Another advantage is that the resulting embodiment is not too rigid part, i.e. being a comparatively soft and flexible element that can easily be arranged within the root end of the blade.

The pull-out strength of interjacent bushings at the blade insert, i.e. bushings separated by adjacent embedding elements, was tested in a piston test. In this experimental setup, a slice of the root end arrangement is produced by cutting the arrangement along a plane normal to the longitudinal blade axis, the thickness of the slice being 10 mm. The load applied to the bushing for effecting displacement (pull-out) from the surrounding fibre composite is recorded. Using this approach it was found that the embedding elements obtainable by the method of the present invention convey an increased pull-out resistance of interjacent bushings which is about 30% higher as compared to known embedding elements produced in a pultrusion process.

The embedding element is preferably an elongate embedding element. The length of the embedding element may be at least 50 cm. In a preferred embodiment, the embedding element has a first end portion and a second end portion, wherein the embedding element comprises a wedge-shaped part which tapers in the direction towards the second end portion. In some embodiments, the wedge-shaped part extends over at least 30% In a preferred embodiment, at least the first end portion of the embedding element comprises a butterfly-shaped cross section.

The embedding element comprises a fibre material and a binding agent, wherein preferably the fibre material is at least partially joined together by means of the binding agent, and wherein preferably the binding agent is present in an amount of 0.1-15 wt% relative to the weight of the fibre material.

Such embedding elements are typically embedded together with fastening members, such as bushings, in the root region of a blade shell structure in between an outer shell part or an outer skin and an inner shell part or an inner skin. Usually, one embedding element is placed between each pair of adjacent bushings, such that the adjacent embedding elements and bushings follow the circumference of the root region cross section. Thereby, the lateral face of each embedding element engages a lateral face of an adjacent bushing. For manufacturing the root end of the blade, subsequently, a resin material is infused in between the outer shell part and the inner shell part for fixing the embedding elements and bushings within the shell structure.

Preferably, the embedding element has a first part comprising lateral faces which are substantially complementary to the lateral faces of the adjacent fastening members, such as bushings, so as to substantially abut the latter. In other words, when the fastening members have a cylindrical shape, the outer lateral surfaces of the first element part may advantageously have a concave shape complimentary to the cylindrical shape of the lateral faces of the fastening members. The wedge-shaped part of the embedding element part may provide a gradual transition between a relatively high wall thickness in the region of the fastening members and a normally lower wall thickness in the transition region and the airfoil region of the blade.

The lower mould plate, which is preferably an elongate mould plate, comprises a first lateral side, such as a first lateral edge, an opposing second lateral side, such as an opposing second lateral edge, and a top surface extending between the first and second lateral sides. Typically, it will further comprise a front side or front edge, a rear edge or rear side, and a bottom surface on the opposite side of the top surface. In some embodiments, the lateral sides take the form of lateral edges. In some embodiments, the lower mould plate may be part of a 3-dimensional structure, such as a U-shaped mould or a box structure. Thus the lateral side may also be constituted by a side surface or transverse plane going upward or downward, or may take the form of an arched surface or a side wall.

A first movable core member and a second movable core member are arranged on the top surface of the lower mould plate, optionally with a film or foil or similar protective layer therebetween. In a preferred embodiment, each of the movable core members are elongate core members, preferably with a length of at least 50 cm, such as at least 100 cm. In some embodiments, the movable core members have a length which is equal to, or exceeds, the length of the embedding element. In a preferred embodiment, the movable core member have a length which is at least twice the length of the embedding element.

In a preferred embodiment, each core member is provided with a longitudinally extending lateral surface for engaging the fibre material, at least part of the lateral surface extending convexly in a cross-sectional view perpendicular to the longitudinal axis of the core member, and wherein the respective lateral surfaces face each other when the first movable core member and a second movable core member are arranged on the top surface of the lower mould plate. Thus, it is preferred that at least part of the respective lateral surfaces of the core members, which faces inward, i.e. towards the fibre material of the embedding element bulges outward, or is convex in a transverse cross section.

Such convex surface can be used to compress and shape the fibre material into the butterfly cross section.

In some embodiments, each core member may have a middle segment, as seen in the longitudinal direction, with a substantially constant height, the middle segment being enclosed by two outer segments each of which have a height tapering towards the two respective ends of the core member. A convex, or outward protruding lateral surface preferably extends throughout the middle segments and along part of the two outer segments. Similarly, the upper mould plate may comprise a middle segment and two outer segments at either side of the middle segment, wherein the outer segments are inclined downward relative to the middle segment. A wedge-shaped section of the embedding element or a preform thereof can be advantageously provided in this way. In some embodiments, the core member is produced by 3D printing.

Preferably, the core members are slidable core members, preferably slidable in a transverse direction i.e. perpendicular to the longitudinal axis of the core member. Thus, it is preferred that the core members are slidable between a first, retracted position with a first distance between the first and second core members, and a second position with a second distance between the first and second core members, the second distance being less than the first distance. This advantageously enables the fibre material such as fibre rovings to be arranged in the mould cavity when the core members are in the first position, and subsequently the compression and forming of the fibre material and binding agent into the desired shape.

The moving, preferably sliding, of one or both of the core members can be achieved by suitable engagement members, such as one or more screws, bolts, wrenches, or pneumatic cylinders, for example arranged at the respective sides of the mould.

The first movable core member is closer to the first lateral side of the lower mould plate than the second movable core member, or closer to a left side of the mould, and the second movable core member is closer to the second lateral side of the lower mould plate than the first movable core member, or closer to the right side of the mould. Preferably, the longitudinal axes of the respective core members are aligned with, i.e. substantially parallel to, the longitudinal axis of the lower mould plate.

A fibre material and a binding agent are arranged on the lower mould plate, optionally on one or more base layers or foils arranged on the lower mould plate, in between the first movable core member and the second movable core member. In a preferred embodiment, the fibre material comprises glass fibre rovings, preferably texturized glass fibre rovings. Texturized roving can be obtained by processing strands of glass fibre through a high-pressure air jet. The high-pressure air jet curls and coils the strands to make them bulkier. Thus, preferably the glass fibre material is treated with a high-pressure air jet, such as with an air nozzle, prior to the arrangement in the moulding cavity. Preferably, continuous filaments of glass fibre are run through a turbulent stream of compressed air. Thus, the fibre material preferably comprises air jet texturized glass fibre rovings. In some embodiments, the fibre material comprises texturized rovings and non-texturized rovings.

In some embodiments, texturized rovings, bulky or entangled rovings are used as fibre material, including rovings that have been air jet entangled or bulked. In particular when using texturized glass fibre rovings in the method of the present invention, an improved pull-out resistance of interjacent fastening elements, such as bushings, at the root end of the blade is observed. Also, the resulting embedding elements lead to a significant reduction of resin pools at the root end of the blade. Upon resin infusion into the root end arrangement, the binding agent of the embedding element advantageously dissolves into the resin, where upon the texturized glass fibre rovings will expand as the binding agent that previously glued them together is dissolved by the resin. Thus, the fibre material will advantageously fill any cracks or holes surrounding the adjacent bushings.

In some embodiments, the fibre material consists of glass fibre rovings, preferably texturized glass fibre rovings. In a preferred embodiment, the binding agent is present in an amount of 0.1-15 wt% relative to the weight of the fibre material.

In a preferred embodiment, the binding agent is a thermoplastic binding agent. Typically, the fibre material is at least partially joined together by means of the binding agent by thermal bonding. In a preferred embodiment, the binding agent is a binding powder, such as a thermoplastic binding powder.

In a preferred embodiment, the binding agent is present in an amount of 0.5-10 wt%, preferably 0.5-5 wt%, more preferably 0.5-3.5 wt%, relative to the weight of the fibre material. The binding agent may also comprise two or more different substances, as long as the total binding agent is present in an amount of 0.1-15 wt% relative to the weight of the fibre material.

According to another embodiment, the melting point of the binding agent is between 40° and 220 °C, preferably between 40 and 180 °C, such as between 40 and 170 °C, or between 40 and 160 °C.

According to a preferred embodiment, the binding agent comprises a polyester, preferably a bisphenolic polyester. An example of such binding agent is a polyester marketed under the name NEOXIL 940. Examples include NEOXIL 940 PMX, NEOXIL 940 KS 1 and NEOXIL 940 HF 2B, all manufactured by DSM Composite Resins AG. Preferably, the binding agent is a polyester, preferably a bisphenolic polyester. In other embodiments, the binding agent is a hotmelt adhesive or based on a prepreg resin.

In a preferred embodiment, the method comprises unwinding glass fibre rovings from one or more bobbins, and arranging the glass fibre rovings on the mould plate, and wherein the glass fibre rovings are contacted with the binding agent prior to the unwinding step, or after the unwinding step but before the arranging step. In other embodiments, the binding agent is applied to the fibre material in the mould.

In a preferred embodiment, the step of arranging the fibre material on the top surface of the lower mould plate comprises arranging fibre rovings of different lengths, successively going from the longest to the shortest fibre rovings. In some embodiments the midpoint of all rovings substantially coincides with the midpoint of moulding cavity as seen in a longitudinal direction. Thus, preferably the thickness of the fibre arrangement is thickest at the center, and tapering towards each end of the preform of the embedding element.

An upper mould plate is placed on top of the first moveable core member and the second moveable core member to form a cavity between the upper and lower mould plates and the first and second moveable core members. Thus, the moulding cavity may be delimited by the first and second moveable core members and the upper and lower mould plates. In particular is preferred that the upper mould plate converges towards the lower mould plate at the two respective ends of the mould, such that a wedge-shaped structure is provided at either side of the mould. In some embodiments, the step of placing an upper mould plate on top of the first moveable core member and the second moveable core member further compresses the fibre material.

One or both of the core members are pushed towards the cavity, i.e. inwards, for compacting the fibre material. Pushing one or both of the core members towards the cavity will reduced the size of the cavity. Thus, the final shape of the moulding cavity is advantageously provided when one or both of the core members have reached a predetermined engagement position. In a preferred embodiment, the pushing step comprises pushing both of the core members towards the cavity for compacting the fibre material until both of the core members reach a final predetermined position.

The fibre material and the binding agent are then heated to form the embedding element or a preform thereof. A preform of the embedding element is particularly preferred a part which can be cut in half at its center along a transverse plane for providing two identically shaped embedding elements. In a preferred embodiment, one or both of the moveable core members comprises a heating element, such as a heat exchanger fluid recirculation system, for heating the fibre material and the binding agent. In other embodiments, heating can be present in the mould plates, or hot air can be passed through grooves in the core members or the mould plates. Preferably, the heating temperature is 100-150 °C.

After heating for a sufficient time, the embedding element or the preform thereof is cooled down, preferably to around 40 °C or lower. Then, one or both of the core members can be retracted, and advantageously the upper mould plate is removed, for releasing the embedding element or the preform thereof. Is particularly preferred that a preform of the embedding element is manufactured by the method of the present invention, in particular a symmetrical preform. Such preform is advantageously cut in half in the transverse direction along its centreline to provide two identically shaped embedding elements with a shape as described above.

Thus, in a preferred embodiment, the step of cutting the preform comprises cutting the preform into half along a plane normal to the longitudinal axis of the preform to provide two embedding elements.

According to another aspect, the present invention relates to an embedding element for embedment in a shell structure of a wind turbine rotor blade, the embedding element being obtainable by the method of the present invention described above, wherein the embedding element has a first end portion and a second end portion, wherein the embedding element comprises a wedge-shaped part which tapers in the direction towards the second end portion.

In a preferred embodiment, the embedding element has an elastic modulus (Young's modulus) of between 0.01 and 110 GPa, preferably between 0.01 and 45 GPa. According to another embodiment, the embedding element has an elastic modulus (Young's modulus) of 0.01-110 GPa, preferably 0.01-70 GPa, such as between 0.01-45 GPa or between 0.01-10 GPa. Embedding elements with such elasticity were found to be particularly well suited for a blade manufacturing process according to the present invention.

In a preferred embodiment, between its two end portions the embedding element is provided with a first longitudinal lateral face extending concavely in a cross-sectional view perpendicular to the longitudinal axis of the embedding element and provided with a second longitudinal lateral face facing opposite the first lateral face and extending concavely in a cross-sectional view perpendicular to the longitudinal axis of the embedding element.

According to another embodiment, the embedding element essentially consists of the fibre material and the binding agent. This means that the embedding element contains not more than 15 wt%, preferably not more than 5 wt%, of material other than fibre material and binding agent relative to the total weight of the embedding element. According to another embodiment, the embedding element consists of the fibre material and the binding agent.

According to another embodiment, the fibre material comprises glass fibres, carbon fibres or a combination. In another embodiment, the fibre material essentially consists of glass fibres. This means that the fibre material contains not more than 15 wt%, preferably not more than 5 wt%, of material other than glass fibres relative to the total weight of the fibre material. According to another embodiment, the fibre material consists of glass fibres.

According to a preferred embodiment, between its two end portions the embedding element is provided with a first longitudinal lateral face extending concavely in a cross-sectional view perpendicular to the longitudinal axis of the embedding element. In a particularly preferred embodiment, between its two end portions the embedding element is provided with a second longitudinal lateral face facing opposite the first lateral face and extending concavely in a cross-sectional view perpendicular to the longitudinal axis of the embedding element. Thus, the embedding element may comprise two longitudinally extending lateral faces on either side, both of which have a concave cross section for improved contact to adjacent cylindrical bushings.

In one aspect, the present invention relates to the use of the above-described embedding elements for manufacturing a wind turbine blade.

According to another aspect, the present invention relates to a wind turbine rotor blade including a shell structure of a fibre-reinforced composite material comprising fibres embedded in a polymer matrix, the blade comprising
a blade shell structure comprising a root region for attachment to a rotor hub, the shell structure having an outer shell part and an inner shell part,
a plurality of embedding elements according to the present invention and a plurality of fastening members, wherein the fastening members are arranged to be used for securing the blade to a wind turbine hub,
wherein the embedding elements and the fastening members are alternately embedded in the root region in between the outer shell part and the inner shell part, such that an embedding element is placed between each pair of adjacent fastening members, and such that the adjacent embedding elements and fastening members follow the circumference of the root region cross section, wherein a lateral face of each embedding element engages a lateral face of an adjacent fastening member.

In a preferred embodiment, a concave lateral face of each embedding element engages a convex lateral face of an adjacent fastening member.

In another aspect, the present invention relates to a method of manufacturing a wind turbine rotor blade including a shell structure of a fibre-reinforced composite material comprising fibres embedded in a polymer matrix, said method comprising the steps of
providing a blade shell structure comprising a root region for attachment to a rotor hub, the shell structure having an outer shell part and an inner shell part,
manufacturing a plurality of embedding elements according to the method of the present invention and a plurality of fastening members, wherein the fastening members are arranged to be used for securing the blade to a wind turbine hub,
alternately embedding the embedding elements and the fastening members in the root region in between the outer shell part and the inner shell part, such that an embedding element is placed between each pair of adjacent fastening members, and such that the adjacent embedding elements and fastening members follow the circumference of the root region cross section, wherein a lateral face of each embedding element engages a lateral face of an adjacent fastening member, thereby allowing access from the outside to the fastening members,
subsequently infusing a resin in between the outer shell part and the inner shell part for fixing the embedding elements and fastening members within the shell structure.

Preferably, the fastening members are bushings. The bushings usually have a circular cross section. Usually, the bushings are cylindrical. Typically, each bushing comprises an internal thread. In a preferred embodiment, a concave lateral face of each embedding element engages a convex lateral face of an adjacent fastening member.

The embedment of the fastening members, such as bushings, and embedding elements typically comprises the steps of securing the fastening members and/or embedding elements to the root flange of a mould part. The flange is usually a metal plate with apertures corresponding to the flange provided on the turbine hub. Fibre glass mats may be placed in between the elements to create small spacings which are subsequently infused with resin.

The resin for subsequent infusion of the shell structure may be a thermosetting resin, such as epoxy, vinyl ester or polyester, or a thermoplastic resin, such as nylon, PVC, ABS, polypropylene or polyethylene. However, the resin may comprise an in-situ polymerisable thermoplastic material. The in-situ polymerisable thermoplastic material may advantageously be selected from the group consisting of pre-polymers of: polybutylene terephthalate (PBT), polyamide-6 (pre-polymer is caprolactam), polyamide-12 (pre-polymer is laurolactam) alloys of polyamide-6 and polyamide-12; polyurethanes (TPU), polymethylmethacrylate (PMMA), polyethylene terephthalate (PET), polycarbonate (PC), polyetheretherketone (PEEK), polyetherketone (PEK), polyethersulfone (PES), polyphenylenesulphide (PPS), polyethylenenaphthalate (PEN) and polybutylenenaphthalate (PBN), cyclic poly(1 ,4-butylene terephthalate) (CBT) and/or combinations thereof.

In one embodiment, a concave lateral face of each embedding element engages a convex lateral face of an adjacent fastening member, preferably a bushing. Even more preferred, two opposite concave lateral faces on either side of each embedding element each engage a corresponding convex lateral face of an adjacent fastening member, such as a bushing.

In another embodiment, the resin infusion step comprises vacuum assisted resin transfer moulding. It was found that particularly in vacuum assisted transfer of resin into the shell structure, the present invention results in significant improvement as compared to known methods. The problem of unwanted wrinkle formation in the shell structure is in particular seen in vacuum assisted moulding, said problem being ameliorated by the embedding elements of the present invention. According to a preferred embodiment, the infusion resin dissolves the binding agent, preferably the thermoplastic binding agent, of the embedding element.

Another example, going beyond the scope of the appended claims, relates to a moulding system for manufacturing an embedding element for embedment in a shell structure of a wind turbine rotor blade, the embedding element having a first end portion and a second end portion, wherein the embedding element comprises a wedge-shaped part which tapers in the direction towards the second end portion, the moulding system comprising a lower mould plate comprising a first lateral side, an opposing second lateral side, and a top surface extending between the first and second lateral sides, a first movable core member and a second movable core member, an upper mould plate arrangeable on top of the first moveable core member and the second moveable core member to form a cavity between the upper and lower mould plates and the first and second moveable core members, and at least one heating device for heating fibre material and binding agent present in said cavity.

In particular, any feature or embodiment described with respect to the method of manufacturing the embedding element may also apply to the embedding element, the wind turbine rotor blade, the method of manufacturing the wind turbine rotor blade and/or to the moulding system of the present invention, and vice versa.

As used herein, the term "longitudinal" is used to describe the direction along the main axis of an element, such as along the length axis of, for example, the embedding element. The term "transverse" refers to the direction that is perpendicular to the longitudinal axis.

As used herein, the term "elongate" refers to a component having a length which is greater than both its width and thickness, for example twice as great.

The term polymerisable thermoplastic material means that the material may be polymerised once at the manufacturing site.

As used herein, the term "wt%" means weight percent. The term "relative to the weight of the fibre material" means a percentage that is calculated by dividing the weight of an agent, such as a binding agent, by the weight of the fibre material. As an example, a value of 1 wt% relative to the weight of the fibre material corresponds to 10 g of binding agent per kilogram of fibre material.

The skilled reader will understand that the elastic modulus, also known as Young's modulus, defines the relationship between stress (force per unit area) and strain (proportional deformation) in a material. Thus, the elastic modulus is a measure of the stiffness of a material. The elastic modulus can be determined by the cantilever beam test, as is well known in the art.

### Detailed description of the invention

The invention is explained in detail below with reference to embodiments shown in the drawings, in which
Fig. 1 shows a wind turbine,
Fig. 2 shows a schematic view of a wind turbine blade,
Fig. 3 shows a schematic view of an airfoil profile through section I-I of Fig. 4,
Fig. 4 shows a schematic view of the wind turbine blade, seen from above and from the side,
Fig. 5 shows a perspective, longitudinal, sectional view of a portion of a root region of a wind turbine blade according to the invention,
Fig. 6 shows a perspective view of a cylindrical bushing arranged next to an embedding element,
Fig. 7 shows a cross-sectional view of one embodiment of a wind turbine blade according to the invention,
Fig. 8 is a perspective view of a moulding system of the present invention in an open state,
Fig. 9 is a perspective view of a moulding system of the present invention in a closed state,
Fig. 10 shows a series of cross-sectional views of the moulding system, illustrating various steps of the method of the present invention,
Fig. 11 is a perspective view of a preform of an embedding element of the present invention,
Fig. 12 is a perspective view of an embedding element of the present invention,
Fig. 13 is a perspective view of a core member of the present invention, and
Fig. 14 is a top view of a core member of the present invention.

### Detailed Description

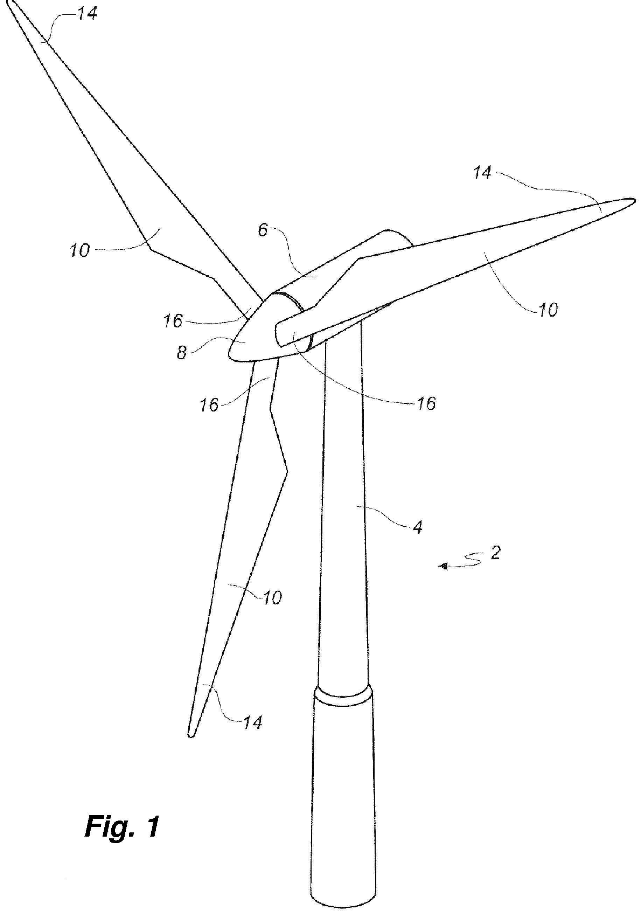

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

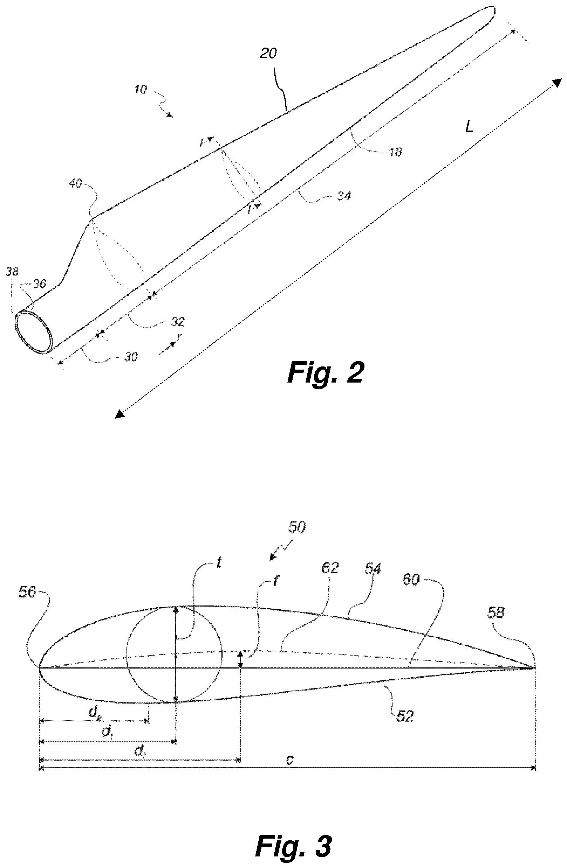

Fig. 2 shows a schematic view of a first embodiment of a wind turbine blade 10 according to the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

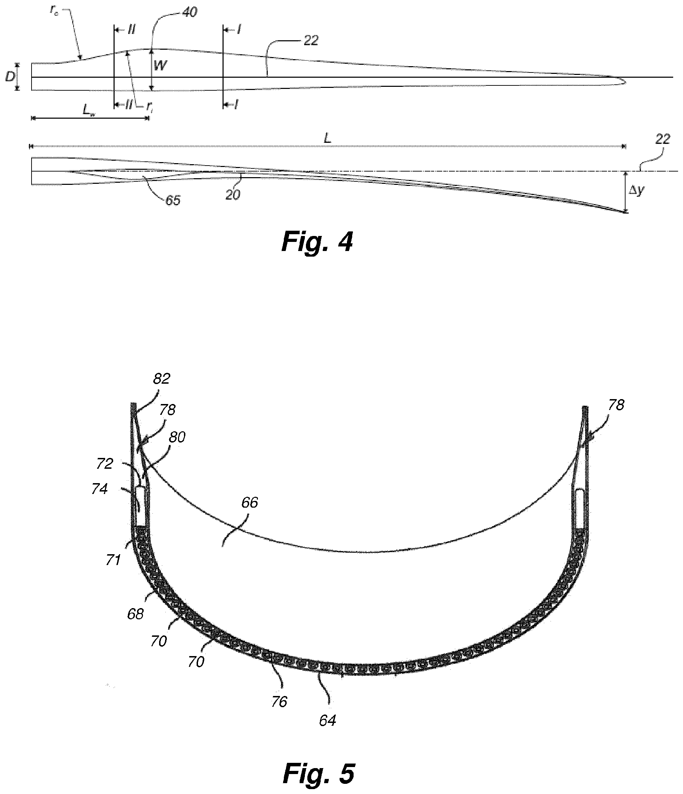

Figs. 3 and 4 depict parameters which are used to explain the geometry of the wind turbine blade according to the invention.

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness *t,* which is defined as the distance between the pressure side 52 and the suction side 54. The thickness *t* of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length *c,* the maximum camber *f,* the position *d_{f}* of the maximum camber *f,* the maximum airfoil thickness *t,* which is the largest diameter of the inscribed circles along the median camber line 62, the position *dₜ* of the maximum thickness *t,* and a nose radius (not shown). These parameters are typically defined as ratios to the chord length *c.* Thus, a local relative blade thickness *t*/*c* is given as the ratio between the local maximum thickness *t* and the local chord length *c.* Further, the position *dₚ* of the maximum pressure side camber may be used as a design parameter, and of course also the position of the maximum suction side camber.

Fig. 4 shows other geometric parameters of the blade. The blade has a total blade length *L.* As shown in Fig. 3, the root end is located at position *r =* 0, and the tip end located at *r* = *L.* The shoulder 40 of the blade is located at a position *r = L_{w},* and has a shoulder width W, which equals the chord length at the shoulder 40. The diameter of the root is defined as *D.* The curvature of the trailing edge of the blade in the transition region may be defined by two parameters, viz. a minimum outer curvature radius *rₒ* and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively. Further, the blade is provided with a prebend, which is defined as *Δy,* which corresponds to the out of plane deflection from a pitch axis 22 of the blade.

As seen in Fig. 5, the blade comprising the root region is formed as a shell structure. The shell structure is typically ring-shaped and comprises an outer part 64 formed by a fibre-reinforced polymer matrix, typically made of glass fibres and/or carbon fibres and a resin, such as epoxy, polyester or vinyl ester. The shell structure also comprises an oppositely arranged inner part 66 being made of the same material as the outer part. Elongated bushings 68 are placed between the parts 64, 66.

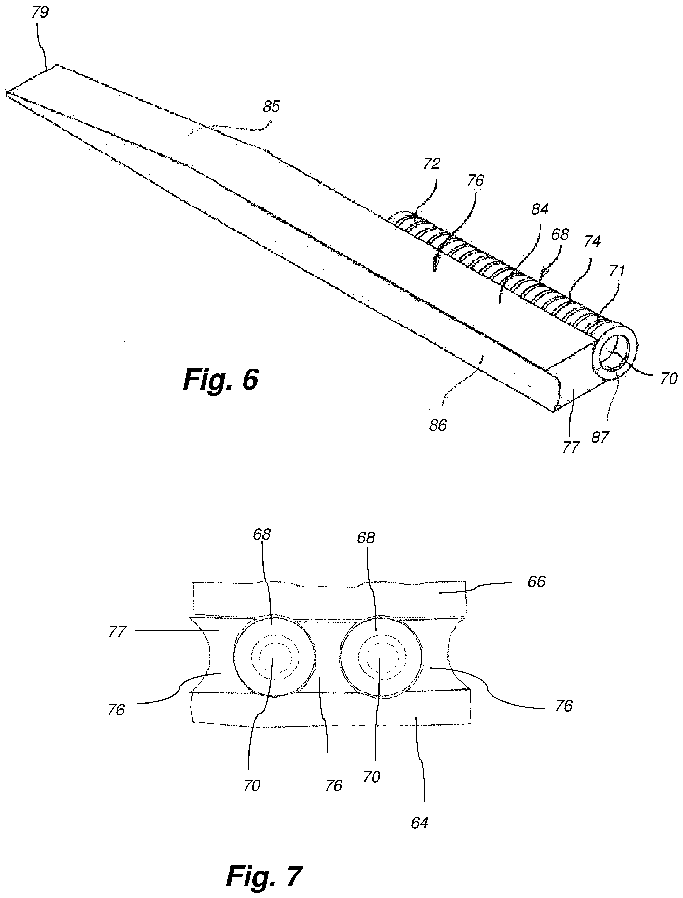

As seen in Fig. 7, the bushings 68 have a circular cross section and comprise a central bore 70 with an inner thread as fastening means. Now referring to Fig. 6, the bushing 68 comprises a first end 71, an oppositely arranged second end 72 and a lateral face 74 with circular cross section in between the ends 71, 72. The first end 71 of the bushing 68 is placed at the root end face of the root region. The bushings 68 are arranged mutually spaced apart so as to substantially follow the circumference of the root region and allow access from the outside to the bushings, i.e. the threads used for mounting the blade to the hub.

As seen in Fig. 5, the bushings 68 may be further connected to a wedge-shaped extension 78 arranged behind each bushing 68 as seen in the longitudinal direction of the blade. A first end 80 of the extension 78 is arranged in abutment with the second end of the bushing 68, and a second end 82 of the extension 78 is tapered. The wedge-shaped extensions 78 may be made of balsawood or a hard polymer foam or another similar material. An intermediate embedding element 76 is arranged in between adjacent bushings 68.

A more detailed view of the embedding element 76 is shown in Fig. 6. The embedding element 76 comprises a first part 84 and a second part 85, as well as a first end portion 77 and a second end portion 79. The first part 84 essentially corresponds to the region between the lateral surface 74 of adjacent bushings 78. The first part 84 is provided with opposite longitudinal lateral faces 86, 87 formed complementary to the surface 74 of adjacent bushings. As seen in Fig. 7, the first and second lateral faces 86, 87 extend concavely in a cross-sectional view perpendicular to the longitudinal axis of the embedding element. The embedding element 76 substantially extends up next to the adjacent bushings when seen in circumferential direction.

Furthermore, the first part 84 of the embedding element 76 may extend from the first end 71 of the bushing 68 and beyond the second end 72 thereof. The second part 85 of the embedding element 76 is a wedge-shaped tapering extension of the first element part 84, which tapers in the direction towards the second end portion 79. The first part 84 may have an extent substantially corresponding to that of the bushings 68.

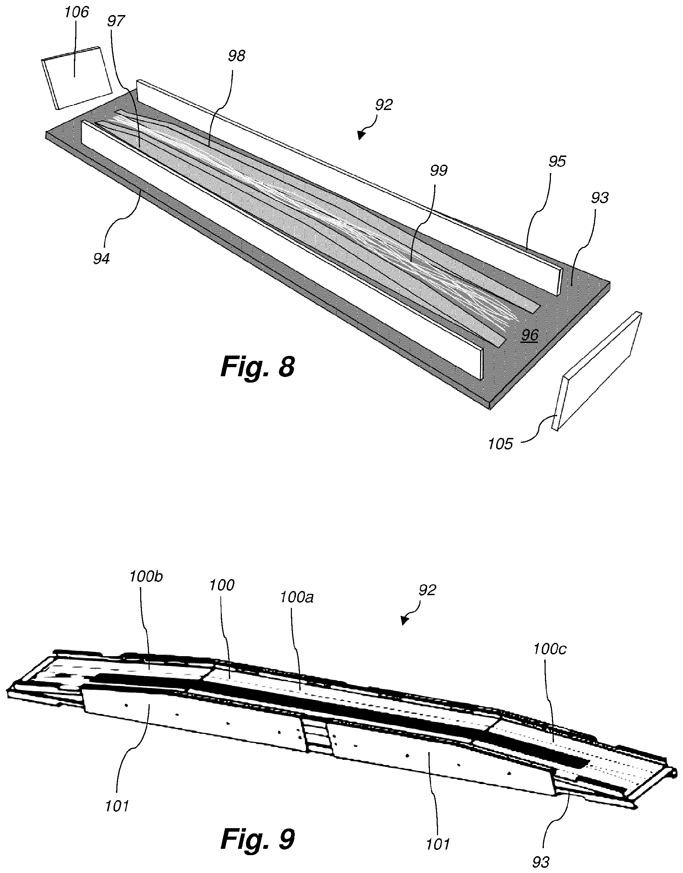

Fig. 8 is a perspective partial view of a moulding system 92 of the present invention in an open state, and Fig. 9 is a perspective view of a moulding system 92 of the present invention in a closed state. The moulding system comprises an elongate lower mould plate 93 with a first lateral side 94, an opposing second lateral side 95, and a top surface 96 extending between the first and second lateral sides 93, 94. A first movable core member 97 and a second movable core member 98 are arranged on the top surface 96 of the lower mould plate 93, such that the first movable core member 97 is closer to the first lateral side 94 and the second movable core member 98 is closer to the second lateral side 95 of the lower mould plate 93.

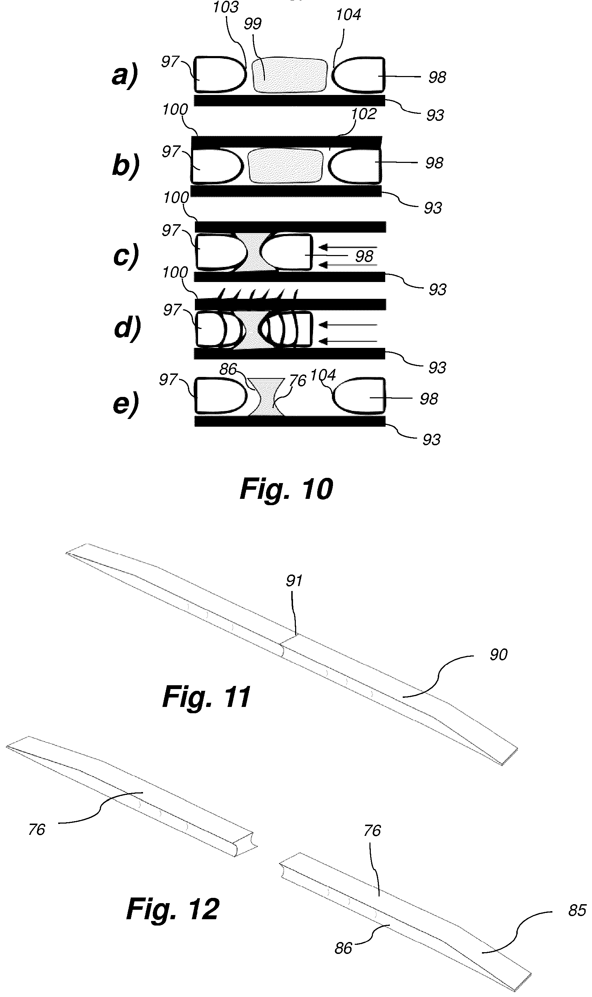

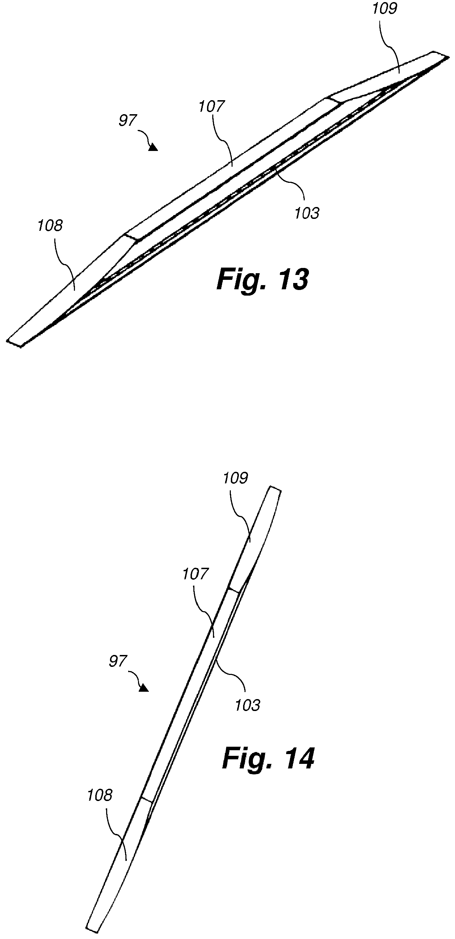

As best seen in the cross sectional view of Fig. 10, each movable core member 97, 98 is provided with a longitudinally extending lateral surface 103, 104 for engaging the fibre material, the lateral surface 103, 104 extending convexly in a cross-sectional view perpendicular to the longitudinal axis of the core member, wherein the respective lateral surfaces 103, 104 face each other when the first movable core member 97 and a second movable core member 98 are arranged on the top surface of the lower mould plate 93. This is further illustrated in the perspective view of the core member 97 in Fig. 13 and the top view of Fig. 14. Also, as seen in Figs. 13 and 14, the core member 97 may have a middle segment 107 with a substantially constant height, enclosed by two outer segments 108, 109, both of which have a height tapering towards the two respective ends of the core member 97.

A fibre material 99 in the form of a plurality of fibre rovings and a binding agent are arranged on the top surface 96 of the lower mould plate 93 in between the first movable core member 97 and the second movable core member 98. The steps of the method of the present invention are illustrated in the cross-sectional views of Fig. 10. As seen in Fig. 10b, an upper mould plate 100 is placed on top of the first moveable core member 97 and the second moveable core member 98 to form a cavity 102 between the upper and lower mould plates and the first and second moveable core members. The upper mould plate is omitted in Fig. 8 to provide better visibility; however, the upper mould plate is shown in the perspective view of Fig. 9 which shows a closed state of the mould system 92. The upper mould plate may comprise a middle segment 100a and two outer segments 100b, 100c at either side, wherein the outer segments are inclined downward relative to the middle segment 100a. The mould system may also optionally comprise a front plate 105 and a back plate 106, as shown in Fig. 8, and/or a set of side plates 101.

As seen in Fig. 10c, the core member 98 is pushed towards the cavity for compacting the fibre material 99 between the core members. This step may be carried out until both of the core members reach a predetermined position. Then the fibre material and the binding agent are heated, as indicated by the wave form in Fig. 10d, to form the embedding element 76 or a preform 90. To this end, one or both of the moveable core members may comprise a heating element, such as a heat exchanger fluid recirculation system, for heating the fibre material and the binding agent.

The embedding element is subsequently cooled down, preferably to room temperature, whereupon the core member(s) can be retracted for releasing the embedding element or the preform thereof; Fig. 10e.

A perspective view of the resulting preform 90, after its removal from the mould, is shown in Fig. 11. In the illustrated embodiment, the preform 90 is cut in half along a cutting line/plane 91 to provide two embedding elements 76, see Fig. 12, each having a tapering, wedge-shaped part and an opposing end with a butterfly cross section.

The invention is not limited to the embodiments described herein, and may be modified or adapted without departing from the scope of the present invention which is defined in the claims.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 30: root region
- 32: transition region
- 34: airfoil region
- 40: shoulder / position of maximum chord
- 50: airfoil profile
- 52: pressure side
- 54: suction side
- 56: leading edge
- 58: trailing edge
- 60: chord
- 62: camber line / median line
- 64: outer part of shell
- 66: inner part of shell
- 68: bushing
- 70: central bore
- 71: first end of bushing
- 72: second end of bushing
- 74: lateral face of bushing
- 76: embedding element
- 77: first end portion of embedding element
- 78: wedge-shaped extension of bushing
- 79: second end portion of embedding element
- 80: first end of extension of bushing
- 82: second end of extension of bushing
- 84: first part of embedding element
- 85: second part of embedding element
- 86: longitudinal lateral face of embedding element
- 87: longitudinal lateral face of embedding element
- 90: preform
- 91: cutting plane
- 92: moulding system
- 93: lower mould plate
- 94: first lateral side of lower mould plate
- 95: second lateral side of lower mould plate
- 96: top surface of lower mould plate
- 97: first movable core member
- 98: second movable core member
- 99: fibre material / fibre rovings
- 100: upper mould plate
- 101: side plate
- 102: cavity
- 103: lateral surface of first movable core member
- 104: lateral surface of second movable core member
- 105: front plate
- 106: back plate
- 107: middle segment of core member
- 108: first outer segment of core member
- 109: second outer segment of core member
- c: chord length
- *dₜ*: position of maximum thickness
- *d_{f}*: position of maximum camber
- *dₚ*: position of maximum pressure side camber
- *f*: camber
- *L*: blade length
- *r*: local radius, radial distance from blade root
- *t*: thickness
- *Δy*: prebend

## Claims

1. A method of manufacturing an embedding element (76) for embedment in a shell structure of a wind turbine rotor blade (10), the method comprising the steps of
providing a lower mould plate (93) comprising a first lateral side (94), an opposing second lateral side (95), and a top surface (96) extending between the first and second lateral sides,
arranging a first movable core member (97) and a second movable core member (98) on the top surface (96) of the lower mould plate (93), such that the first movable core member is closer to the first lateral side and the second movable core member is closer to the second lateral side of the lower mould plate (93),
arranging a fibre material (99) and a binding agent on the lower mould plate (93) in between the first movable core member (97) and the second movable core member (98),
placing an upper mould plate (100) on top of the first moveable core member and the second moveable core member to form a cavity (102) between the upper and lower mould plates and the first and second moveable core members,
pushing one or both of the core members towards the cavity for compacting the fibre material (99),
heating the fibre material and the binding agent to form the embedding element (76) or a preform (90) thereof,
cooling the embedding element (76) or the preform (90) thereof,
retracting one or both of the core members for releasing the embedding element or the preform thereof, and
optionally cutting the preform (90) to provide two or more embedding elements (76),
wherein each movable core member is provided with a longitudinally extending lateral surface (103, 104) for engaging the fibre material, the lateral surface of the core member extending convexly in a cross-sectional view perpendicular to the longitudinal axis of the core member, and wherein the respective lateral surfaces (103, 104) of the core members face each other when the first movable core member (97) and a second movable core member (98) are arranged on the top surface of the lower mould plate (93), and wherein the embedding element (76) has a first end portion (77) and a second end portion (79), wherein the embedding element (76) comprises a wedge-shaped part (85) which tapers in the direction towards the second end portion (79).

2. A method according to claim 1, wherein the fibre material comprises glass fibre rovings, preferably texturized glass fibre rovings.

3. A method according to any of the preceding claims, wherein the method comprises unwinding glass fibre rovings from one or more bobbins, and arranging the glass fibre rovings on the mould plate, and wherein the glass fibre rovings are contacted with the binding agent prior to the unwinding step, or after the unwinding step but before the arranging step.

4. A method according to any of the preceding claims, wherein the step of arranging the fibre material on the top surface of the lower mould plate (93) comprises arranging fibre rovings of different lengths, successively going from the longest to the shortest fibre rovings.

5. A method according to any of the preceding claims, wherein the pushing step comprises pushing both of the core members towards the cavity for compacting the fibre material until both of the core members reach a predetermined position.

6. A method according to any of the preceding claims, wherein one or both of the moveable core members comprises a heating element, such as a heat exchanger fluid recirculation system, for heating the fibre material and the binding agent.

7. A method according to any of the preceding claims, wherein the step of cutting the preform comprises cutting the preform in half along a plane (91) normal to the longitudinal axis of the preform to provide two embedding elements.

8. A method according to any of the preceding claims, wherein the first end portion (77) of the embedding element (76) comprises a butterfly-shaped cross section.

9. An embedding element (76) obtainable by the method of any of claims 1-8, wherein the embedding element (76) has a first end portion (77) and a second end portion (79), wherein the embedding element (76) comprises a wedge-shaped part (85) which tapers in the direction towards the second end portion (79).

10. An embedding element (76) according to claim 9, wherein between its two end portions the embedding element (76) is provided with a first longitudinal lateral face (86) extending concavely in a cross-sectional view perpendicular to the longitudinal axis of the embedding element (76) and provided with a second longitudinal lateral face (87) facing opposite the first lateral face (86) and extending concavely in a cross-sectional view perpendicular to the longitudinal axis of the embedding element (76).

11. A wind turbine rotor blade (10) including a shell structure of a fibre-reinforced composite material comprising fibres embedded in a polymer matrix, the blade comprising
a blade shell structure comprising a root region for attachment to a rotor hub, the shell structure having an outer shell part (64) and an inner shell part (66),
a plurality of embedding elements (76) according to any of claims 9-10 and a plurality of fastening members (68), wherein the fastening members are arranged to be used for securing the blade to a wind turbine hub,
wherein the embedding elements (76) and the fastening members are alternately embedded in the root region in between the outer shell part (64) and the inner shell part (66), such that an embedding element (76) is placed between each pair of adjacent fastening members (68), and such that the adjacent embedding elements (76) and fastening members (68) follow the circumference of the root region cross section, wherein a lateral face of each embedding element (76) engages a lateral face (74) of an adjacent fastening member (68).

12. A method of manufacturing a wind turbine rotor blade (10) including a shell structure of a fibre-reinforced composite material comprising fibres embedded in a polymer matrix, said method comprising the steps of
providing a blade shell structure comprising a root region for attachment to a rotor hub, the shell structure having an outer shell part (64) and an inner shell part (66),
manufacturing a plurality of embedding elements (76) according to the method of any of claims 1-8 and a plurality of fastening members (68), wherein the fastening members are arranged to be used for securing the blade to a wind turbine hub,
alternately embedding the embedding elements (76) and the fastening members in the root region in between the outer shell part (64) and the inner shell part (66), such that an embedding element (76) is placed between each pair of adjacent fastening members (68), and such that the adjacent embedding elements (76) and fastening members (68) follow the circumference of the root region cross section, wherein a lateral face of each embedding element (76) engages a lateral face (74) of an adjacent fastening member (68), thereby allowing access from the outside to the fastening members,
subsequently infusing a resin in between the outer shell part and the inner shell part for fixing the embedding elements (76) and fastening members (68) within the shell structure.

## Patentansprüche

1. Verfahren zur Herstellung eines Einbettungselements (76) zur Einbettung in einer Schalenstruktur einer Windturbinenrotorschaufel (10), wobei das Verfahren die folgenden Schritte umfasst
Bereitstellen einer unteren Formplatte (93), die eine erste laterale Seite (94), eine gegenüberliegende zweite laterale Seite (95) und eine Oberseite (96), die sich zwischen der ersten und der zweiten lateralen Seite erstreckt, umfasst,
Anordnen eines ersten beweglichen Kernelements (97) und eines zweiten beweglichen Kernelements (98) auf der Oberseite (96) der unteren Formplatte (93), sodass das erste bewegliche Kernelement näher an der ersten lateralen Seite und das zweite bewegliche Kernelement näher an der zweiten lateralen Seite der unteren Formplatte (93) sind,
Anordnen eines Fasermaterials (99) und eines Bindemittels auf der unteren Formplatte (93) zwischen dem ersten beweglichen Kernelement (97) und dem zweiten beweglichen Kernelement (98),
Auflegen einer oberen Formplatte (100) oben auf das erste bewegliche Kernelement und das zweite bewegliche Kernelement, um einen Hohlraum (102) zwischen der oberen und der unteren Formplatte und dem ersten und dem zweiten beweglichen Kernelement zu bilden,
Drücken eines oder beider Kernelemente in Richtung des Hohlraums zum Verdichten des Fasermaterials (99),
Erwärmen des Fasermaterials und des Bindemittels, um das Einbettungselement (76) oder einen Vorformling (90) davon zu bilden,
Kühlen des Einbettungselements (76) oder des Vorformlings (90) davon, Zurückziehen eines oder beider Kernelemente zum Freigeben des Einbettungselements oder des Vorformlings davon, und
wahlweise, Schneiden des Vorformlings (90), um zwei oder mehr Einbettungselemente (76) bereitzustellen,
wobei jedes bewegliche Kernelement mit einer sich in Längsrichtung erstreckenden Seitenfläche (103, 104) zum In-Eingriff-Bringen mit dem Fasermaterial versehen ist, wobei sich die Seitenfläche des Kernelements in einer Querschnittsansicht senkrecht zur Längsachse des Kernelements konvex erstreckt, und wobei die jeweiligen Seitenflächen (103, 104) der Kernelemente einander zugewandt sind, wenn das erste bewegliche Kernelement (97) und ein zweites bewegliches Kernelement (98) auf der Oberseite der unteren Formplatte (93) angeordnet sind, und wobei das Einbettungselement (76) einen ersten Endabschnitt (77) und einen zweiten Endabschnitt (79) aufweist, wobei das Einbettungselement (76) einen keilförmigen Teil (85) umfasst, der sich in Richtung auf den zweiten Endabschnitt (79) verjüngt.

2. Verfahren nach Anspruch 1, wobei das Fasermaterial Glasfaserrovings, bevorzugt texturierte Glasfaserrovings, umfasst.

3. Verfahren nach einem der vorstehenden Ansprüche, wobei das Verfahren das Abwickeln von Glasfaserrovings von einer oder mehreren Spulen und das Anordnen der Glasfaserrovings auf der Formplatte umfasst, und wobei die Glasfaserrovings vor dem Abwickelschritt oder nach dem Abwickelschritt, aber vor dem Anordnungsschritt, mit dem Bindemittel in Kontakt gebracht werden.

4. Verfahren nach einem der vorstehenden Ansprüche, wobei der Schritt des Anordnens des Fasermaterials auf der Oberseite der unteren Formplatte (93) das Anordnen von Faserrovings unterschiedlicher Längen umfasst, wobei nacheinander von den längsten zu den kürzesten Faserrovings übergegangen wird.

5. Verfahren nach einem der vorstehenden Ansprüche, wobei der Schritt des Drückens das Drücken beider Kernelemente in Richtung des Hohlraums zum Verdichten des Fasermaterials umfasst, bis beide Kernelemente eine vorbestimmte Position erreichen.

6. Verfahren nach einem der vorstehenden Ansprüche, wobei eines oder beide der beweglichen Kernelemente ein Heizelement, wie beispielsweise ein Wärmetauscherfluid-Rückführungssystem, zum Erwärmen des Fasermaterials und des Bindemittels umfasst.

7. Verfahren nach einem der vorstehenden Ansprüche, wobei der Schritt des Schneidens des Vorformlings das Halbieren des Vorformlings entlang einer Ebene (91) senkrecht zur Längsachse des Vorformlings umfasst, um zwei Einbettungselemente bereitzustellen.

8. Verfahren nach einem der vorstehenden Ansprüche, wobei der erste Endabschnitt (77) des Einbettungselements (76) einen schmetterlingsförmigen Querschnitt umfasst.

9. Einbettungselement (76), erhältlich durch das Verfahren nach einem der Ansprüche 1-8, wobei das Einbettungselement (76) einen ersten Endabschnitt (77) und einen zweiten Endabschnitt (79) aufweist, wobei das Einbettungselement (76) einen keilförmigen Teil (85) umfasst, der sich in Richtung auf den zweiten Endabschnitt (79) verjüngt.

10. Einbettungselement (76) nach Anspruch 9, wobei zwischen seinen zwei Endabschnitten das Einbettungselement (76) mit einer ersten in Längsrichtung verlaufenden Seitenfläche (86) versehen ist, die sich in einer Querschnittsansicht senkrecht zur Längsachse des Einbettungselements (76) konkav erstreckt, und mit einer zweiten in Längsrichtung verlaufenden Seitenfläche (87) versehen ist, die der ersten Seitenfläche (86) gegenüberliegt und sich in einer Querschnittsansicht senkrecht zur Längsachse des Einbettungselements (76) konkav erstreckt.

11. Windturbinenrotorschaufel (10) einschließlich einer Schalenstruktur aus einem faserverstärkten Verbundmaterial, das in einer Polymermatrix eingebettete Fasern umfasst, wobei die Schaufel Folgendes umfasst
eine Schaufelschalenstruktur, die einen Wurzelbereich zur Befestigung an einer Rotornabe umfasst, wobei die Schalenstruktur einen äußeren Schalenteil (64) und einen inneren Schalenteil (66) aufweist,
eine Mehrzahl von Einbettungselementen (76) nach einem der Ansprüche 9-10 und eine Mehrzahl von Befestigungselementen (68), wobei die Befestigungselemente dazu vorgesehen sind, zum Sichern der Schaufel an einer Nabe einer Windturbine verwendet zu werden,
wobei die Einbettungselemente (76) und die Befestigungselemente abwechselnd in dem Wurzelbereich zwischen dem äußeren Schalenteil (64) und dem inneren Schalenteil (66) eingebettet sind, sodass ein Einbettungselement (76) zwischen jedem Paar benachbarter Befestigungselemente (68) angeordnet ist, und sodass die benachbarten Einbettungselemente (76) und Befestigungselemente (68) dem Umfang des Querschnitts des Wurzelbereichs folgen, wobei eine Seitenfläche jedes Einbettungselements (76) mit einer Seitenfläche (74) eines benachbarten Befestigungselements (68) in Eingriff steht.

12. Verfahren zur Herstellung einer Windturbinenrotorschaufel (10) einschließlich einer Schalenstruktur aus einem faserverstärkten Verbundmaterial, das in einer Polymermatrix eingebettete Fasern umfasst, wobei das Verfahren die folgenden Schritte umfasst
Bereitstellen einer Schaufelschalenstruktur, die einen Wurzelbereich zur Befestigung an einer Rotornabe umfasst, wobei die Schalenstruktur einen äußeren Schalenteil (64) und einen inneren Schalenteil (66) aufweist,
Herstellen einer Mehrzahl von Einbettungselementen (76) nach dem Verfahren nach einem der Ansprüche 1 bis 8 und einer Mehrzahl von Befestigungselementen (68), wobei die Befestigungselemente dazu vorgesehen sind, zum Sichern der Schaufel an einer Nabe einer Windturbine verwendet zu werden,
abwechselndes Einbetten der Einbettungselemente (76) und der Befestigungselemente in den Wurzelbereich zwischen dem äußeren Schalenteil (64) und dem inneren Schalenteil (66), sodass ein Einbettungselement (76) zwischen jedem Paar benachbarter Befestigungselemente (68) angeordnet ist, und sodass die benachbarten Einbettungselemente (76) und Befestigungselemente (68) dem Umfang des Querschnitts des Wurzelbereichs folgen, wobei eine Seitenfläche jedes Einbettungselements (76) mit einer Seitenfläche (74) eines benachbarten Befestigungselements (68) in Eingriff steht, wodurch Zugang von außen zu den Befestigungselementen ermöglicht wird,
anschließendes Infundieren eines Harzes zwischen dem äußeren Schalenteil und dem inneren Schalenteil zum Fixieren der Einbettungselemente (76) und Befestigungselemente (68) innerhalb der Schalenstruktur.

## Revendications

1. Procédé de fabrication d'un élément d'incorporation (76) pour incorporation dans une structure de coque d'une pale de rotor de turbine éolienne (10), le procédé comprenant les étapes consistant à
fournir une plaque de moule inférieure (93) comprenant un premier côté latéral (94), un second côté latéral opposé (95), et une surface supérieure (96) s'étendant entre les premier et second côtés latéraux,
disposer un premier élément de noyau mobile (97) et un second élément de noyau mobile (98) sur la surface supérieure (96) de la plaque de moule inférieure (93), de telle sorte que le premier élément de noyau mobile soit plus proche du premier côté latéral et que le second élément de noyau mobile soit plus proche du second côté latéral de la plaque de moule inférieure (93),
disposer un matériau fibreux (99) et un agent liant sur la plaque de moule inférieure (93) entre le premier élément de noyau mobile (97) et le second élément de noyau mobile (98),
placer une plaque de moule supérieure (100) au-dessus du premier élément de noyau mobile et du second élément de noyau mobile pour former une cavité (102) entre les plaques de moule supérieure et inférieure et les premier et second éléments de noyau mobile,
pousser un ou les deux éléments de noyau vers la cavité afin de compacter le matériau fibreux (99),
chauffer le matériau fibreux et l'agent liant pour former l'élément d'incorporation (76) ou une préforme (90) de celui-ci,
refroidir l'élément d'incorporation (76) ou la préforme (90) de celui-ci,
rétracter un ou les deux éléments de noyau afin de libérer l'élément d'incorporation ou la préforme de celui-ci, et
facultativement couper la préforme (90) pour fournir deux ou plusieurs éléments d'incorporation (76),
dans lequel chaque élément de noyau mobile est muni d'une surface latérale (103, 104) s'étendant longitudinalement pour venir en prise avec le matériau fibreux, la surface latérale de l'élément de noyau s'étendant de manière convexe dans une vue en coupe transversale perpendiculaire à l'axe longitudinal de l'élément de noyau, et dans lequel les surfaces latérales respectives (103, 104) des éléments de noyau se font face lorsque le premier élément de noyau mobile (97) et un second élément de noyau mobile (98) sont disposés sur la surface supérieure de la plaque de moule inférieure (93), et dans lequel l'élément d'incorporation (76) présente une première portion d'extrémité (77) et une seconde portion d'extrémité (79), dans lequel l'élément d'incorporation (76) comprend une partie en forme de coin (85) qui se rétrécit dans la direction vers la seconde portion d'extrémité (79).

2. Procédé selon la revendication 1, dans lequel le matériau fibreux comprend des mèches de fibres de verre, de préférence des mèches de fibres de verre texturées.

3. Procédé selon l'une quelconque des revendications précédentes, dans lequel le procédé comprend le déroulement de mèches de fibres de verre à partir d'une ou plusieurs bobines, et la disposition des mèches de fibres de verre sur la plaque de moule, et dans lequel les mèches de fibres de verre sont mises en contact avec l'agent liant avant l'étape de déroulement, ou après l'étape de déroulement mais avant l'étape de disposition.

4. Procédé selon l'une quelconque des revendications précédentes, dans lequel l'étape consistant à disposer le matériau fibreux sur la surface supérieure de la plaque de moule inférieure (93) comprend la disposition de mèches de fibres de longueurs différentes, en allant successivement des mèches de fibres les plus longues aux mèches de fibres les plus courtes.

5. Procédé selon l'une quelconque des revendications précédentes, dans lequel l'étape de poussée comprend le fait de pousser les deux éléments de noyau vers la cavité afin de compacter le matériau fibreux jusqu'à ce que les deux éléments de noyau atteignent une position prédéterminée.

6. Procédé selon l'une quelconque des revendications précédentes, dans lequel un ou les deux éléments de noyau mobile comprennent un élément chauffant, tel qu'un système de recirculation de fluide d'échange thermique, pour chauffer le matériau fibreux et l'agent liant.

7. Procédé selon l'une quelconque des revendications précédentes, dans lequel l'étape consistant à couper la préforme comprend le fait de couper la préforme en deux le long d'un plan (91) normal à l'axe longitudinal de la préforme pour fournir deux éléments d'incorporation.

8. Procédé selon l'une quelconque des revendications précédentes, dans lequel la première portion d'extrémité (77) de l'élément d'incorporation (76) comprend une section transversale en forme de papillon.

9. Élément d'incorporation (76) pouvant être obtenu par le procédé de l'une quelconque des revendications 1 à 8, dans lequel
l'élément d'incorporation (76) présente une première portion d'extrémité (77) et une seconde portion d'extrémité (79), dans lequel l'élément d'incorporation (76) comprend une partie en forme de coin (85) qui se rétrécit dans la direction vers la seconde portion d'extrémité (79).

10. Élément d'incorporation (76) selon la revendication 9, dans lequel entre ses deux portions d'extrémité l'élément d'incorporation (76) est muni d'une première face latérale longitudinale (86) s'étendant de manière concave dans une vue en coupe transversale perpendiculaire à l'axe longitudinal de l'élément d'incorporation (76) et muni d'une seconde face latérale longitudinale (87) faisant face à l'opposé de la première face latérale (86) et s'étendant de manière concave dans une vue en coupe transversale perpendiculaire à l'axe longitudinal de l'élément d'incorporation (76).

11. Pale de rotor de turbine éolienne (10) incluant une structure de coque en un matériau composite renforcé de fibres comprenant des fibres incorporées dans une matrice polymère, la pale comprenant
une structure de coque de pale comprenant une région d'emplanture destinée à être fixée à un moyeu de rotor, la structure de coque présentant une partie de coque externe (64) et une partie de coque interne (66),
une pluralité d'éléments d'incorporation (76) selon l'une quelconque des revendications 9 à 10 et une pluralité d'organes de fixation (68), dans laquelle les organes de fixation sont disposés pour être utilisés pour fixer la pale à un moyeu de turbine éolienne,
dans laquelle les éléments d'incorporation (76) et les organes de fixation sont incorporés de manière alternée dans la région d'emplanture entre la partie de coque externe (64) et la partie de coque interne (66), de telle sorte qu'un élément d'incorporation (76) soit placé entre chaque paire d'organes de fixation adjacents (68), et de telle sorte que les éléments d'incorporation adjacents (76) et les organes de fixation (68) suivent la circonférence de la section transversale de la région d'emplanture, dans laquelle une face latérale de chaque élément d'incorporation (76) vient en prise avec une face latérale (74) d'un organe de fixation adjacent (68).

12. Procédé de fabrication d'une pale de rotor de turbine éolienne (10) incluant une structure de coque d'un matériau composite renforcé de fibres comprenant des fibres incorporées dans une matrice polymère, ledit procédé comprenant les étapes consistant à
fournir une structure de coque de pale comprenant une région d'emplanture destinée à être fixée à un moyeu de rotor, la structure de coque présentant une partie de coque externe (64) et une partie de coque interne (66),
fabriquer une pluralité d'éléments d'incorporation (76) selon le procédé de l'une quelconque des revendications 1 à 8 et une pluralité d'organes de fixation (68), dans lequel les organes de fixation sont disposés pour être utilisés pour fixer la pale à un moyeu de turbine éolienne,
incorporer de manière alternée les éléments d'incorporation (76) et les organes de fixation dans la région d'emplanture entre la partie de coque externe (64) et la partie de coque interne (66), de telle sorte qu'un élément d'incorporation (76) soit placé entre chaque paire d'organes de fixation adjacents (68), et de telle sorte que les éléments d'incorporation adjacents (76) et les organes de fixation (68) suivent la circonférence de la section transversale de la région d'emplanture, dans lequel une face latérale de chaque élément d'incorporation (76) vient en prise avec une face latérale (74) d'un organe de fixation adjacent (68), permettant ainsi un accès depuis l'extérieur aux organes de fixation,
infuser ensuite une résine entre la partie de coque externe et la partie de coque interne pour fixer les éléments d'incorporation (76) et les organes de fixation (68) à l'intérieur de la structure de coque.
